# EUROPEAN PATENT SPECIFICATION

(11) **EP 3 562 886 B1**
(45) Date of publication and mention of the grant of the patent: **18.01.2023**
(21) Application number: 17838158.8
(22) Date of filing: 22.12.2017
(51) Int. Cl.: C08L 69/00

(54) **HIGH FLOW, DUCTILE POLY(ALIPHATIC ESTER-CARBONATE) COMPOSITIONS**
HOCHFLIESSFÄHIGE, DUKTILE POLY(ALIPHATISCHE ESTER-CARBONAT)-ZUSAMMENSETZUNGEN
COMPOSITIONS DE POLY(ESTER-CARBONATE ALIPHATIQUE) DUCTILE, À ÉCOULEMENT ÉLEVÉ

(30) Priority: 30.12.2016 US 201662440451 P
(43) Date of publication of application: 06.11.2019
(73) Proprietor: SHPP Global Technologies B.V., 4612 PX Bergen op Zoom (NL)
(72) Inventor: XU, Yuzhen, Shanghai 201319 (CN); HAN, Xue, Shanghai 201319 (CN); ZHOU, Hiker, Shanghai 201319 (CN)
(74) Representative: Modiano, Micaela Nadia
(86) International application number: PCT/IB2017/058381
(87) International publication number: WO 2018/122720

(56) References cited:
- WO-A1-2013/170452
- WO-A1-2013/170456
- US-A- 4 186 154
- US-A1- 2010 168 370

## Description

### BACKGROUND

This disclosure relates to polycarbonate compositions, and in particular to high flow, ductile polycarbonate compositions, methods of manufacture, and uses thereof.

Polycarbonates (PC) are synthetic engineering thermoplastic resins derived from bisphenols and phosgene, or their derivatives. They are linear polyesters of carbonic acid and can be formed from dihydroxy compounds and carbonate diesters or carbonyl halides, or by ester interchange. Polycarbonates are a useful class of polymers having many beneficial properties.

High flow, ductile (HFD) polycarbonate is a BPA copolymer composition that includes a structural unit derived from a dicarboxylic acid, for example dodecanedioic acid. In the composition, the dicarboxylic acid component can provide a lower glass transition temperature (T_{g}) and a lower flow viscosity, while the BPA component can provide a high modulus and heat resistance. HFD PC compositions are suitable for injection molding applications that require a high flow polymer composition. HFD polycarbonates are used in the manufacture of high performance optical devices, owing to their low glass transition temperature (T_{g}), low flow viscosity, high modulus, and good heat resistance.

WO2013/l70452 discloses a composition containing at least one poly(aliphatic ester)-polycarbonate copolymer, a polysiloxane-polycarbonate copolymer, non-bonding glass fibers, and titanium dioxide, where the composition exhibits excellent impact properties and an ultra-white color. WO2013/170456 discloses a composition including at least one poly(aliphatic ester)-polycarbonate copolymer, a polysiloxane-polycarbonate copolymer, and glass fibers, where the composition exhibits good flow, aesthetic, and impact properties. US 4,186,154 discloses mixtures comprising about 60% by weight to 5% by weight of aromatic polycarbonates which have a Mw between about 60,000 and 120,000 (component A) and about 40% by weight to 95% by weight of aromatic polycarbonates which have a Mw between about 28,000 and 40,000 (component B), as well as to processes for their preparation and their use for the production of shaped articles. US 2010/168370 discloses a camera lens comprising a thermoplastic composition comprising a poly(aliphatic ester)-polycarbonate copolymer comprising soft block ester units derived from an alpha, omega C6-20 aliphatic dicarboxylic acid or derivative thereof, a dihydroxyaromatic compound, and a carbonate source, wherein the thermoplastic composition has a melt volume rate of 13 to 25 cc/10 min at 250° C and under a load of 1.2 Kg and a dwell time of 6 minutes, according to ASTM D1238-04, and wherein the camera lens has an effective lens area of 0.5 to 100 mm².

Due to various "critical to quality" requirements of customers, there is a continuing need for polycarbonate compositions that have good melt flow properties, desirable aesthetic properties, and a high heat resistance, combined with the ability to be processed in an efficient manner.

### SUMMARY

The above-described deficiencies and other deficiencies of the art are met by a thermoplastic composition, comprising, based on the total weight of the composition: at least 15 wt%, preferably at least 20 wt%, of a first poly(aliphatic ester-carbonate) having a first weight average molecular weight, wherein the weight average molecular weight of the first poly(aliphatic ester-carbonate) is 50,000 to 80,000 grams per mole, preferably 65,000 to 75,000 grams per mole, when measured by gel permeation chromatography using bisphenol A homopolycarbonate standards; at least 10 wt%, preferably at least 20 wt%, or more preferably at least 25 wt% of a second poly(aliphatic ester-carbonate) having a second weight average molecular weight that is lower than the first first weight average molecular weight, wherein the weight average molecular weight of the second poly(aliphatic ester-carbonate) is 30,000 to 50,000 grams per mole, preferably 36,000 to 45,000 grams per mole, when measured by gel permeation chromatography using bisphenol A homopolycarbonate standards; 0.01 to 0.5 wt% of a mold release agent; 0.01 to 0.5 wt% of a thermal stabilizer; 0.01 to 0.5 wt% of a chain extender, wherein the foregoing amounts total 100 wt%, and are based on the total weight of the composition, and wherein the thermoplastic composition has an average melt volume flow rate of less than 40 cc/10 min, preferably less than 30 cc/10 min, more preferably less than 15 cc/10 min, or less than 10 cc/10 min when measured at 300°C at a shear load of 1.2 kg, dwell 300 seconds, in accordance with ASTM 1238, and an average melt volume flow rate of less than 40 cc/10 min, preferably less than 30 cc/10 min, more preferably less than 20 cc/10 min, or less than 8 cc/10 min when measured at 250°C at a shear load of 5.0 kg, dwell 300 seconds, in accordance with ASTM 1238.

Also disclosed are methods for the manufacture of the above composition and layers comprising the composition.

Articles, including layers and embossed layers comprising the above composition are also disclosed.

The above described and other features are exemplified by the following drawings, detailed description, examples, and claims.

### DETAILED DESCRIPTION

The present inventors have discovered high flow, ductile polycarbonate (HFD PC) films that are suitable for use in high temperature thermal embossing processes. The HFD PC films can be thermally embossed at high temperatures (235 to 255°C), can be processed at fast texture transfer line speeds (0.5 to 0.7 meters per minutes), and have desirable texture after embossing and release. During the release process, the embossed HFD PC films have a release performance that enables the films to retain their shape and be suitable for high performance optical applications, for example as retro reflective films in road signs and as diamond grade film sheets.

The thermoplastic compositions from which the HFD PC films are molded include a first and a second poly(aliphatic ester-carbonate), a mold release agent, a thermal stabilizer, and a chain extender. The thermoplastic compositions desirably have low average melt volume flow at 300°C (less than 40 cubic centimeters per 10 minutes (cc/10 min), or less than 30 cc/10 min, or less than 15 cc/10 min, or less than 10 cc/10 min when measured at 300°C at a shear load of 1.2 kg, dwell 300 seconds, in accordance with ASTM 1238) and at 250°C (less than 40 cc/10 min, or less than 30 cc/10 min, or less than 20 cc/10 min, or less than 8 cc/10 min when measured at 250°C at a shear load of 5.0 kg, dwell 300 seconds, in accordance with ASTM 1238).

The compositions according to the invention include at least 15 weight percent (wt%), preferably at least 20 wt%, of the first poly(aliphatic ester-carbonate); at least 10 wt%, preferably at least 20 wt%, of the second poly(aliphatic ester-carbonate); 0.01 to 0.5 wt% of the mold release agent; 0.01 to 0.5 wt% of the thermal stabilizer; and 0.01 to 0.5 wt% of the chain extender; wherein the foregoing amounts total 100 wt% and are based on the total weight of the composition . The first and second poly(aliphatic ester-carbonate)s are described below.

The weight average molecular weight of the first poly(aliphatic ester-carbonate) according to the invention is 50,000 to 80,000 grams per mole (g/mol), preferably 65,000 to 75,000 g/mol, when measured by gel permeation chromatography (GPC) using bisphenol A homopolycarbonate standards. The weight average molecular weight of the second poly(aliphatic ester-carbonate) according to the invention is 30,000 to 50,000 g/mol, preferably 36,000 to 45,000 g/mol, when measured by GPC using bisphenol A homopolycarbonate standards.

The aliphatic ester units in the first and the second poly(aliphatic ester-carbonate) each can be derived from sebacic acid, and are present in each poly(aliphatic ester-carbonate) in an amount of 5 to 10 mole percent (mol%), or 6 to 9 mol%, based on 100 mol% of each poly(aliphatic ester-carbonate); and the carbonate units are derived from bisphenol A.

In a specific embodiment, the composition includes 15 to 80 wt%, preferably 20 to 60 wt% of the first poly(aliphatic ester-carbonate); 10 to 80 wt%, preferably 20 to 60 wt% of the second poly(aliphatic ester-carbonate); 0 to 50 wt%, preferably 10 to 50 wt% of a branched bisphenol A homopolycarbonate; 0.01 to 0.5 wt% of a mold release agent, preferably glycerol monostearate; and 0.01 to 8 wt% of a light stabilizer, and the composition has an average melt volume flow rate of less than 15 cc/10 min when measured at 300°C at a shear load of 1.2 kg, dwell 300 seconds, in accordance with ASTM 1238.

In another specific embodiment, the composition includes 15 to 35 wt%, preferably 20 to 30 wt% of the first poly(aliphatic ester-carbonate); 40 to 75 wt%, preferably 45 to 70 wt% of the second poly(aliphatic ester-carbonate); 10 to 30 wt%, preferably 15 to 25 wt% of a branched bisphenol A homopolycarbonate; 0.01 to 0.5 wt% of a mold release agent, preferably glycerol monostearate; and 0.01 to 8 wt% of a light stabilizer; and the composition has an average melt volume flow rate of less than 15 cc/10 min when measured at 300°C at a shear load of 1.2 kg, dwell 300 seconds, in accordance with ASTM 1238.

In still another specific embodiment, the composition includes 60 to 90 wt%, preferably 65 to 85 wt% of the first poly(aliphatic ester-carbonate); 10 to 40 wt%, preferably 15 to 35 wt% of the second poly(aliphatic ester-carbonate); 0.01 to 0.5 wt% of a mold release agent, or glycerol monostearate; and 0.01 to 8 wt% of a light stabilizer; and the composition has an average melt volume flow rate of less than 10 cc/10 min when measured at 300°C at a shear load of 1.2 kg, 360 seconds, in accordance with ASTM 1238.

In a specific embodiment, the composition is embossable at a temperature that is at least 5°C lower, 5% less, preferably at least 10°C lower, more preferably at least 15°C lower than the same composition further comprising an unbranched bisphenol A homopolycarbonate, when measured at a line speed of 0.5 meters per minute.

In another specific embodiment, the composition has a notched Izod impact strength of greater than 750 Joules per meter (J/m), preferably greater than 800 J/m, when measured on a sample bar molded from the composition and having a thickness of 3.2 millimeters (mm), in accordance with ASTM D256; a tensile modulus of elasticity of greater than 2,000 megapascals (MPa), preferably greater than 2,100 MPa, when measured in accordance with ASTM D638; a tensile stress at yield of greater than 50 MPa, preferably greater than 55 MPa, when measured in accordance with ASTM D638; a tensile elongation at break of greater than 80% , preferably greater than 90%, when measured in accordance with ASTM D638; and a heat deflection temperature of greater than or equal to 108°C when measured on a sample bar molded from the composition and having a thickness of 3.2 mm in accordance with ASTM D648.

The composition of any of the foregoing embodiments can be prepared by melt blending the components of the composition, and optionally extruding the composition to form a layer. The layer can have a thickness of 2 to 5,000 micrometers (µm), preferably 5 to 1,000 µm, more preferably 5 to 500 µm, most preferably 5 to 50 µm. The layer can be an embossed layer or an embossed reflective layer. The embossed layer can be prepared by thermally embossing the layer as described above at a line speed line speed of 0.45 meters per minute (m/min), preferably 0.5 m/min, more preferably 0.6 m/min, most preferably 0.7 m/min, at 235 to 255°C

The poly(aliphatic ester-carbonate)s described herein are copolymers comprising carbonate units and ester units, and are also known as polyester-polycarbonates. Generally, as used herein, the term or suffix "polycarbonate" means a polymer or copolymer having repeating structural carbonate units of formula (1) 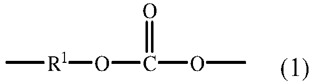 wherein at least 60 percent of the total number of R¹ groups are aromatic, or each R¹ contains at least one C₆₋₃₀ aromatic group. Specifically, each R¹ can be derived from a dihydroxy compound such as an aromatic dihydroxy compound of formula (2) or a bisphenol of formula (3). 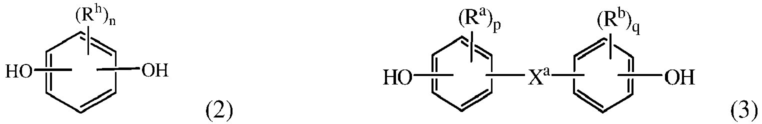 In formula (2), each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4.

In formula (3), R^{a} and R^{b} are each independently a halogen, C₁₋₁₂ alkoxy, or C₁₋₁₂ alkyl, and p and q are each independently integers of 0 to 4, such that when p or q is less than 4, the valence of each carbon of the ring is filled by hydrogen. In an embodiment, p and q are both 0, or p and q are both 1, and R^{a} and R^{b} are each a C₁₋₃ alkyl group, specifically methyl, disposed meta to the hydroxy group on each arylene group. X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group, for example, a single bond, -O-, -S-, -S(O)-, -S(O)₂-, -C(O)-, or a C₁₋₁₈ organic group, which can be cyclic or acyclic, aromatic or non-aromatic, and can further comprise heteroatoms such as halogens, oxygen, nitrogen, sulfur, silicon, or phosphorous. For example, X^{a} can be a substituted or unsubstituted C₃₋₁₈ cycloalkylidene; a C₁₋₂₅ alkylidene of the formula - C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula - C(=R^{e})- wherein R^{e} is a divalent C₁₋₁₂ hydrocarbon group.

Examples of bisphenol compounds include 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like.

Specific dihydroxy compounds include resorcinol, 2,2-bis(4-hydroxyphenyl) propane ("bisphenol A" or "BPA"), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane, and 1,1-bis(4-hydroxyphenyl)-3,3,5-trimethylcyclohexane (isophorone bisphenol).

"Polycarbonates" includes homopolycarbonates (wherein each R¹ in the polymer is the same), copolymers comprising different R¹ moieties in the carbonate ("copolycarbonates"), and copolymers comprising carbonate units and other types of polymer units, such as ester units or siloxane units. In a specific embodiment, the polycarbonate is a linear homopolymer containing bisphenol A carbonate units (BPA-PC), commercially available under the trade name LEXAN from SABIC.

As described above, "polycarbonate" as used herein also includes copolymers comprising carbonate units and ester units ("poly(ester-carbonate)s", also known as polyester-polycarbonates. Poly(ester-carbonate)s further contain, in addition to recurring carbonate chain units of formula (1), repeating ester units of formula (4) 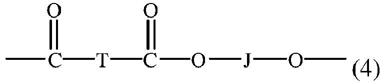 wherein J is a divalent group derived from a dihydroxy compound (which includes a reactive derivative thereof), and can be, for example, a C₂₋₁₀ alkylene, a C₆₋₂₀ cycloalkylene a C₆₋₂₀ arylene, or a polyoxyalkylene group in which the alkylene groups contain 2 to 6 carbon atoms, specifically, 2, 3, or 4 carbon atoms; and T is a divalent group derived from a dicarboxylic acid (which includes a reactive derivative thereof), and can be, for example, a C₂₋₂₀ alkylene, a C₆₋₂₀ cycloalkylene, or a C₆₋₂₀ arylene. Copolyesters containing a combination of different T or J groups can be used. The polyester units can be branched or linear.

Specific dihydroxy compounds include aromatic dihydroxy compounds of formula (2) (e.g., resorcinol), bisphenols of formula (3) (e.g., bisphenol A), a C₁₋₈ aliphatic diol such as ethane diol, n-propane diol, i-propane diol, 1,4-butane diol, 1,6-cyclohexane diol, 1,6-hydroxymethylcyclohexane, or a combination comprising at least one of the foregoing dihydroxy compounds. Aliphatic dicarboxylic acids that can be used include C₆₋₂₀ aliphatic dicarboxylic acids (which includes the terminal carboxyl groups), specifically linear C₈₋₁₂ aliphatic dicarboxylic acid such as decanedioic acid (sebacic acid); and alpha, omega-C₁₂ dicarboxylic acids such as dodecanedioic acid (DDDA). Aromatic dicarboxylic acids that can be used include terephthalic acid, isophthalic acid, naphthalene dicarboxylic acid, 1,6-cyclohexane dicarboxylic acid, or a combination comprising at least one of the foregoing acids. A combination of isophthalic acid and terephthalic acid wherein the weight ratio of isophthalic acid to terephthalic acid is 91:9 to 2:98 can be used.

Specific ester units include ethylene terephthalate units, n-proplyene terephthalate units, n-butylene terephthalate units, ester units derived from isophthalic acid, terephthalic acid, and resorcinol (ITR ester units), and ester units derived from sebacic acid and bisphenol A. The molar ratio of ester units to carbonate units in the poly(ester-carbonate)s can vary broadly, for example 1:99 to 99:1, specifically, 10:90 to 90:10, more specifically, 25:75 to 75:25, most specifically from 2:98 to 15:85. In some embodiments, the molar ratio of ester units to carbonate units in the poly(ester-carbonate)s can vary from 1:99 to 30: 70, specifically 2:98 to 25:75, more specifically 3:97 to 20:80, most specifically from 5:95 to 15:85.

A specific example of a poly(ester-carbonate) is a poly(aliphatic ester-carbonate) derived from a linear C₆₋₂₀ aliphatic dicarboxylic acid (which includes a reactive derivative thereof), specifically a linear C₆-C₁₂ aliphatic dicarboxylic acid (which includes a reactive derivative thereof). Specific dicarboxylic acids include n-hexanedioic acid (adipic acid), n-decanedioic acid (sebacic acid), and alpha, omega-C₁₂ dicarboxylic acids such as dodecanedioic acid (DDDA). A specific poly(aliphatic ester- carbonate) is of formula (5): 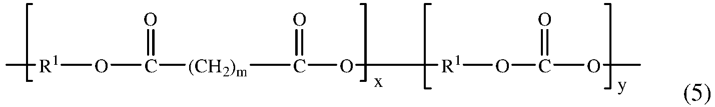 wherein each R¹ can be the same or different, and is as described in formula (1), m is 4 to 18, specifically 5 to 10, or 6 to 9, and the average molar ratio of ester units to carbonate units x:y is 99:1 to 1:99, including 13:87 to 2:98, preferably 9:91 to 2:98, more preferably 8:92 to 2:98. In a specific embodiment, the poly(aliphatic ester-polycarbonate) comprises bisphenol A sebacate ester units and bisphenol A carbonate units, having, for example an average molar ratio of x:y of 2:98 to 8:92, for example 6:94. Such poly(aliphatic ester-carbonate)s are commercially available as LEXAN HFD from SABIC (LEXAN is a trademark of SABIC IP B. V.).

The poly(aliphatic ester-carbonate) can have a weight average molecular weight of 30,000 to 80,000 grams per mole (g/mol), preferably 50,000 to 80,000 g/mol, more preferably 30,000 to 50,000 g/mol, even more preferably 15,000 to 40,000 g/mol, most preferably 20,000 to 38,000 g/mol, with 65,000 to 75,000 g/mol being particularly preferred, including 36,000 to 45,000 g/mol (measured by GPC based on BPA homopolycarbonate standards).

In some embodiments, the polyester is a poly(ether-ester) block copolymer, also known in the art as thermoplastic elastomers or thermoplastic ester elastomers (TPEE). Poly(ether-ester) block copolymers consist essentially of "soft block" long-chain ester units of formula (6) 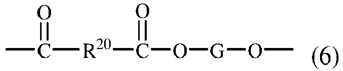 wherein G is a derived from a poly(C₁-C₄ alkylene oxide) glycol having a number-average molecular weight of 400 to 6000, and R²⁰ is derived from a C₄-C₂₄ aliphatic or aromatic dicarboxylic acid, preferably an aromatic dicarboxylic acid; and "hard block" short-chain ester units of formula (7) 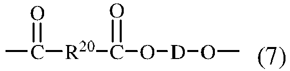 wherein D is a C₁-C₁₀ alkylene or cycloalkylene derived from the corresponding diol having a molecular weight of less than or equal to 300; and R²⁰ is derived from a C₄-C₂₄ aliphatic, alicyclic, or aromatic dicarboxylic acid, preferably an aromatic dicarboxylic acid; with the proviso that the short-chain ester units constitute about 40% to about 90% by weight of the poly(ether-ester) block copolymer, and the long-chain ester units constitute about 10% to about 60% by weight of the poly(ether-ester) block copolymer.

A variety of poly(ether-ester) copolymers are commercially available, for example under the trademarks ARNITEL EM400 and ARNITEL EL630 poly(ether-ester) copolymers from DSM; HYTREL 3078, HYTREL 4056, HYTREL 4556, and HYTREL 6356 poly(ether-ester) copolymers from DuPont; and ECDEL 9966 poly(ether-ester) copolymer from Eastman Chemical. In all cases, the soft block is derived from tetrahydrofuran. In the HYTREL 4556, HYTREL 6356, ARNITEL EM400, and ARNITEL EL630 poly(ether-ester) copolymers, the hard block is based on poly(butylene terephthalate) (PBT). In the HYTREL 4056 poly(esterether) copolymer, the hard block contains isophthalate units in addition to terephthalate units. In the ECDEL 9966 poly(ether-ester) copolymer, the hard block is based on poly(1,4-cyclohexanedimethanol-1,4-cyclohexane dicarboxylate) (PCCD) units.

Polycarbonates can be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and C₁-C₂₂ alkyl-substituted phenols such as p-cumyl-phenol, resorcinol monobenzoate, and p-and tertiarybutyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used.

In the manufacture of poly(ester-carbonate)s by interfacial polymerization, rather than using the dicarboxylic acid or diol directly, the reactive derivatives of the diacid or diol, such as the corresponding acid halides, in particular the acid dichlorides and the acid dibromides can be used. Thus, for example instead of using isophthalic acid, terephthalic acid, or a combination comprising at least one of the foregoing acids, isophthaloyl dichloride, terephthaloyl dichloride, or a combination comprising at least one of the foregoing dichlorides can be used.

Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1, 1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt%. Combinations comprising linear polycarbonates and branched polycarbonates can be used.

In some embodiments, a particular type of branching agent is used to create branched polycarbonate materials. These branched polycarbonate materials have statistically more than two end groups. The branching agent is added in an amount (relative to the bisphenol monomer) that is sufficient to achieve the desired branching content, that is, more than two end groups. The molecular weight of the polymer can become very high upon addition of the branching agent, and to avoid excess viscosity during polymerization, an increased amount of a chain stopper agent can be used, relative to the amount used when the particular branching agent is not present. The amount of chain stopper used is generally above 5 mole percent (mol%) and less than 20 mol% compared to the bisphenol monomer.

Such branching agents include aromatic triacyl halides of formula (8), a trisubstituted phenol of formula (9), or a compound of formula (10) (isatin-bis-phenol) 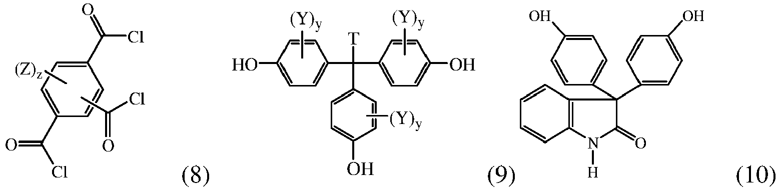 wherein in formula (8), Z is a halogen, C₁₋₃ alkyl, C₁₋₃ alkoxy, C₇₋₁₂ arylalkylene, C₇₋₁₂ alkylarylene, or nitro, and z is 0 to 3; and in formula (9) wherein T is a C₁₋₂₀ alkyl, C₁₋₂₀ alkoxy, C₇₋₁₂ arylalkyl, or C₇₋₁₂ alkylaryl, Y is a halogen, C₁₋₃ alkyl, C₁₋₃ alkoxy, C₇₋₁₂ arylalkyl, C₇₋₁₂ alkylaryl, or nitro, and s is 0 to 4. In general, the amount of branching agent is effective to provide 0.1 to 10 branching units per 100 R¹ units, specifically 0.5 to 8 branching units per 100 R¹ units, and more specifically 0.75 to 5 branching units per 100 R¹ units. Examples of specific branching agents that are particularly effective in the compositions include trimellitic trichloride (TMTC), tris-p-hydroxyphenylethane (THPE), and isatin-bis-phenol. A branched, cyanophenol end-capped bisphenol A homopolycarbonate produced via interfacial polymerization, containing 3 mol% 1,1,1-tris(4-hydroxyphenyl)ethane (THPE) branching agent, is commercially available under the trade name LEXAN CFR from SABIC.

In addition to the polycarbonates described above, combinations of the polycarbonate with other thermoplastic polymers, for example combinations of homopolycarbonates, copolycarbonates, and polycarbonate copolymers with polyesters, can be used. Useful polyesters include, for example, polyesters having repeating units of formula (7), which include poly(alkylene dicarboxylates), liquid crystalline polyesters, and polyester copolymers. The polyesters described herein are generally completely miscible with the polycarbonates when blended.

The polyesters can be obtained by interfacial polymerization or melt-process condensation as described above, by solution phase condensation, or by transesterification polymerization wherein, for example, a dialkyl ester such as dimethyl terephthalate can be transesterified with ethylene glycol using acid catalysis, to generate poly(ethylene terephthalate). A branched polyester, in which a branching agent, for example, a glycol having three or more hydroxyl groups or a trifunctional or multifunctional carboxylic acid has been incorporated, can be used. Furthermore, it can be desirable to have various concentrations of acid and hydroxyl end groups on the polyester, depending on the ultimate end use of the composition.

Useful polyesters can include aromatic polyesters, poly(alkylene esters) including poly(alkylene arylates), and poly(cycloalkylene diesters). Aromatic polyesters can have a polyester structure according to formula (4), wherein J and T are each aromatic groups as described herein. In an embodiment, useful aromatic polyesters can include poly(isophthalateterephthalate-resorcinol) esters, poly(isophthalate-terephthalate-bisphenol A) esters, poly[(isophthalate-terephthalate-resorcinol) ester-co-(isophthalate-terephthalate-bisphenol A)] ester, or a combination comprising at least one of these. Also contemplated are aromatic polyesters with a minor amount, e.g., 0.5 to 10 wt%, based on the total weight of the polyester, of units derived from an aliphatic diacid or an aliphatic polyol to make copolyesters. Poly(alkylene arylates) can have a polyester structure according to formula (4), wherein T comprises groups derived from aromatic dicarboxylates, cycloaliphatic dicarboxylic acids, or derivatives thereof. Examples of specifically useful T groups include 1,2-, 1,3-, and 1,4-phenylene; 1,4- and 1,5- naphthylenes; cis- or trans-1,4-cyclohexylene; and the like. Specifically, where T is 1,4-phenylene, the poly(alkylene arylate) is a poly(alkylene terephthalate). In addition, for poly(alkylene arylate), specifically useful alkylene groups J include, for example, ethylene, 1,4-butylene, and bis-(alkylene-disubstituted cyclohexane) including cis- or trans-1,4-(cyclohexylene)dimethylene. Examples of poly(alkylene terephthalates) include poly(ethylene terephthalate) (PET), poly(1,4-butylene terephthalate) (PBT), and poly(n-propylene terephthalate) (PPT). Also useful are poly(alkylene naphthoates), such as poly(ethylene naphthanoate) (PEN), and poly(butylene naphthanoate) (PBN). A specifically useful poly(cycloalkylene diester) is poly(1,4-cyclohexanedimethylene terephthalate) (PCT). Combinations comprising at least one of the foregoing polyesters can also be used.

Copolymers comprising alkylene terephthalate repeating ester units with other ester groups can also be useful. Specifically useful ester units can include different alkylene terephthalate units, which can be present in the polymer chain as individual units, or as blocks of poly(alkylene terephthalates). Copolymers of this type include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly(cycloalkylene diester)s can also include poly(alkylene cyclohexanedicarboxylate)s. Of these, a specific example is poly(1,4-cyclohexane-dimethanol-1,4-cyclohexanedicarboxylate) (PCCD), having recurring units of formula (11) 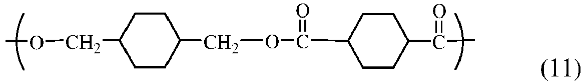 wherein, as described using formula (4), J is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

The polycarbonate and polyester can be used in a weight ratio of 1:99 to 99:1, specifically 10:90 to 90:10, and more specifically 30:70 to 70:30, depending on the function and properties desired.

It is desirable for such a polyester and polycarbonate blend to have a melt volume flow rate (MVR) of 5 to 150 cc/10 min, specifically 7 to 125 cc/10 min, more specifically 9 to 110 cc/10 min, and still more specifically 10 to 100 cc/10 min., as measured at 300°C under a load of 1.2 kilograms, according to ASTM D1238-04.

In an embodiment, the composition further comprises a poly(carbonate-siloxane), also referred to in the art as a polycarbonate-polysiloxane copolymer. The polysiloxane blocks comprise repeating diorganosiloxane units as in formula (12) 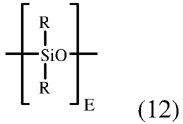 wherein each R is independently a C₁₋₁₃ monovalent organic group. For example, R can be a C₁-C₁₃ alkyl, C₁-C₁₃ alkoxy, C₂-C₁₃ alkenyl, C₂-C₁₃ alkenyloxy, C₃-C₆ cycloalkyl, C₃-C₆ cycloalkoxy, C₆-C₁₄ aryl, C₆-C₁₀ aryloxy, C₇-C₁₃ arylalkyl, C₇-C₁₃ aralkoxy, C₇-C₁₃ alkylaryl, or C₇-C₁₃ alkylaryloxy. The foregoing groups can be fully or partially halogenated with fluorine, chlorine, bromine, or iodine, or a combination thereof. In an embodiment, where a transparent poly(carbonate-siloxane) is desired, R is unsubstituted by halogen. Combinations of the foregoing R groups can be used in the same copolymer.

The value of E in formula (12) can vary widely depending on the type and relative amount of each component in the thermoplastic composition, the desired properties of the composition, and like considerations. Generally, E has an average value of 2 to 1,000, specifically 2 to 500, more specifically 2 to 200, even more specifically 2 to 125, most specifically 5 to 80, with 10 to 70 being particularly preferred. In an embodiment, E has an average value of 10 to 80 preferably 10 to 40, and in still another embodiment, E has an average value of 40 to 80, preferably 40 to 70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used.

A combination of a first and a second (or more) poly(carbonate-siloxane) copolymers can be used, wherein the average value of E of the first copolymer is less than the average value of E of the second copolymer.

In an embodiment, the polysiloxane blocks are of formula (13) or (14) 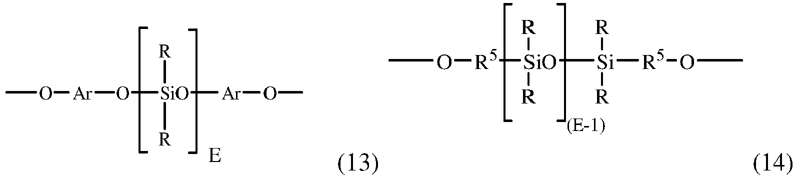 wherein E is as defined in formula (12); each R can be the same or different, and is as defined in formula (12) In formula (13), Ar can be the same or different, and is a substituted or unsubstituted C₆₋₃₀ arylene, wherein the bonds are directly connected to an aromatic moiety. Ar groups in formula (13) can be derived from a C₆₋₃₀ dihydroxyarylene compound, for example a dihydroxyarylene compound. Suitable dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used. In formula (14), each R⁵ is independently a divalent C₁₋₃₀ organic group, and wherein the polymerized polysiloxane unit is the reaction residue of its corresponding dihydroxy compound. In a specific embodiment, the polysiloxane blocks are of formula (15): 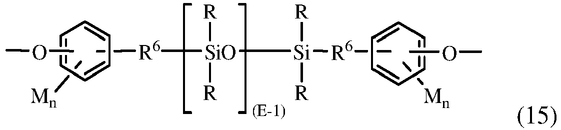 wherein R and E are as defined in formula (12). R⁶ in formula (15) is a divalent C₂₋₈ aliphatic. Each M in formula (15) can be the same or different, and can be a halogen, cyano, nitro, C₁₋₈ alkylthio, C₁₋₈ alkyl, C₁-C₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ arylalkylene, C₇₋₁₂ arylalkyleneoxy, C₇₋₁₂ alkylarylene, or C₇₋₁₂ alkylarylenoxy, wherein each n is independently 0, 1, 2, 3, or 4.

In an embodiment, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, R is methyl, M is methoxy, n is one, and R6 is a divalent C₁-C₃ aliphatic group. Specific polysiloxane blocks are of the formula 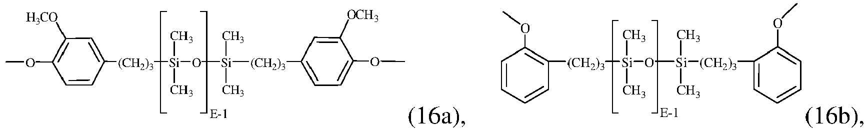 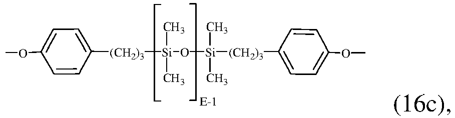 or a combination comprising at least one of the foregoing, wherein E has an average value of 2 to 200, 2 to 125, 5 to 125, 5 to 100, 5 to 50, 20 to 80, or 5 to 20.

Blocks of formulas (16a), (16b), or (16c) can be derived from the corresponding dihydroxy polysiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers can then be manufactured, for example, by the synthetic procedure of European Patent Application Publication No. 0 524 731 A1 of Hoover, page 5, Preparation 2.

Transparent poly(carbonate-siloxane) copolymers comprise carbonate units (1) derived from bisphenol A, and repeating polysiloxane blocks (16a), (16b), (16c), or a combination comprising at least one of the foregoing (specifically of formula 16a), wherein E has an average value of 4 to 50, 4 to 15, specifically 5 to 15, more specifically 6 to 15, and still more specifically 7 to 10. The transparent copolymers can be manufactured using one or both of the tube reactor processes described in U.S. Patent Application No. 2004/0039145A1 or the process described in U.S. Patent No. 6,723,864 can be used to synthesize the poly(carbonatesiloxane) copolymers.

The poly(carbonate-siloxane) copolymers can comprise 50 to 99 wt% of carbonate units and 1 to 50 wt% siloxane units. Within this range, the polyorganosiloxanepolycarbonate copolymer can comprise 70 to 98 wt%, more specifically 75 to 97 wt% of carbonate units and 2 to 30 wt%, more specifically 3 to 25 wt% siloxane units.

In another embodiment, the polycarbonate is a poly(carbonate-siloxane) copolymer comprising bisphenol A carbonate units and siloxane units, for example blocks containing 5 to 200 dimethylsiloxane units, such as those commercially available under the trade name EXL from SABIC. Other specific polycarbonates that can be used include poly(ester-carbonate-siloxane)s comprising bisphenol A carbonate units, isophthalate-terephthalatebisphenol A ester units, and siloxane units, for example blocks containing 5 to 200 dimethylsiloxane units, such as those commercially available under the trade name FST from SABIC.

The poly(carbonate-siloxane) copolymers can have a weight average molecular weight of 2,000 to 100,000 g/mol, specifically 5,000 to 50,000 g/mol as measured by GPC using a crosslinked styrene-divinyl benzene column, at a sample concentration of 1 mg/mL, and as calibrated with polycarbonate standards.

The poly(carbonate-siloxane) copolymers can have a MVR, measured at 300°C/1.2 kg, of 1 to 50 cc/10 min, specifically 2 to 30 cc/10 min. Mixtures of poly(carbonatesiloxane) copolymers of different flow properties can be used to achieve the overall desired flow property.

The composition further includes a combination of additives is referred to herein as an "additive package". In addition to the first poly(aliphatic ester-carbonate) and the second poly(aliphatic ester-carbonate), the composition further includes 0.01 to 0.5 wt% of a mold release agent, 0.01 to 0.5 wt% of a thermal stabilizer, and 0.01 to 0.5 wt% of a chain extender. In another embodiment, the additive package further includes a light stabilizer. In one embodiment, the composition includes the additive package, and further includes an additional amount of a heat stabilizer, mold release agent, chain extender, or combinations thereof.

Mold release agents can include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol A; polyalpha-olefins; epoxidized soybean oil; silicones, including silicone oils; esters, for example, fatty acid esters such as alkyl stearyl esters, e.g., methyl stearate, stearyl stearate, pentaerythritol tetrastearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a suitable solvent; waxes such as beeswax, montan wax, paraffin wax, or the like.

In one embodiment, the mold release agent is glycerol monostearate, pentaerythritol tetrastearate, or a combination comprising at least one of the foregoing, preferably wherein the mold release agent is glycerol monostearate. In an embodiment, the composition includes 0.01 to 0.5 wt%, preferably 0.1 to 0.5 wt%, more preferably 0.1 to 0.2 wt%, of the mold release agent based on the total weight of the composition.

Thermal stabilizer additives include organophosphites (e.g. triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or combinations comprising at least one of the foregoing thermal stabilizers. The thermal stabilizer can be tris(2,4-di-t-butylphenyl) phosphate available as IRGAPHOS^{™} 168. Thermal stabilizers may be used in amounts of 0.01 to 0.5 wt%, preferably 0.1 to 0.5 wt%, more preferably 0.1 to 0.2 wt%, based on the total weight of the composition.

Examples of chain extender additives include epoxy compounds, acrylic and methacrylic acid-derived polymers and copolymers, polyols multifunctional acid anhydrides, polyacids, polyamines, isocyanates, phosphate esters, aziridines, oxazolines, multivalent metal compounds, and phosphite esters. These can be used either alone respectively or in combinations with each other. In an embodiment, the chain extender is a highly functional modified styrene acrylic polymer having a molecular weight of about 6,800 g/mol (Joncryl^{®} ADR-4368). However, the epoxy compound is not especially limited, but is a compound having at least two epoxy groups per molecule. Chain extenders may be used in amount of 0.01 to 0.5 wt%, preferably 0.1 to 0.5 wt%, more preferably 0.1 to 0.2 wt%, based on the total weight of the composition.

The thermoplastic composition can include various other additives ordinarily incorporated into polymer compositions of this type, with the proviso that the additive(s) are selected so as to not significantly adversely affect the desired properties of the thermoplastic composition. Such additives can be mixed at a suitable time during the mixing of the components for forming the composition. Additives include fillers, reinforcing agents, antioxidants, antistatic agents, colorants such as such as titanium dioxide, carbon black, and organic dyes, surface effect additives, radiation stabilizers, flame-retardants, and anti-drip agents. A combination of additives can be used. In general, the additives are used in the amounts generally known to be effective. For example, the total amount of the additive composition (other than any impact modifier, filler, or reinforcing agent) can be 0.001 to 10.0 wt%, preferably 0.01 to 5 wt%, each based on the total weight of the composition.

Plasticizers and lubricants can be used. There is considerable overlap among mold release agents, plasticizers, and lubricants. Any suitable material described herein as a mold release agent can be used as a plasticizer or lubricant. Such materials are generally used in amounts of 0.01 to 1 wt%, more preferably 0.01 to 0.5 wt%, based on the total weight of the composition.

Light stabilizers or ultraviolet light (UV) absorbing additives, also referred to as UV stabilizers, can also be used. Light stabilizer additives include benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone, or the like, or combinations comprising at least one of the foregoing light stabilizers.
Exemplary UV absorbing agents include, for example, hydroxybenzophenones; hydroxybenzotriazoles; hydroxybenzotriazines; cyanoacrylates; oxanilides; benzoxazinones; aryl salicylates; monoesters of diphenols such as resorcinol monobenzoate; 2-(2H-benzotriazol-2-yl)-4-(1,1,3,3-tetramethylbutyl)-phenol (CYASORB^{™} 5411); 2-hydroxy-4-n-octyloxybenzophenone (CYASORB^{™} 531); 2-[4,6-bis(2,4-dimethylphenyl)-1,3,5-triazin-2-yl]-5-(octyloxy)-phenol (CYASORB^{™} 1164); 2,2'-(1,4- phenylene)bis(4H-3,1-benzoxazin-4-one) (CYASORB^{™} UV- 3638); poly[(6-morphilino-s-triazine-2,4-diyl)[2,2,6,6-tetramethyl-4-piperidyl) imino]-hexamethylene[(2,2,6,6-tetramethyl-4-piperidyl)imino], 2-hydroxy-4-octyloxybenzophenone (UVINUL^{™}3008), 6-tert-butyl-2-(5-chloro-2H-benzotriazole-2-yl)-4-methylphenyl (UVINUL^{™}3026), 2,4-di-tert-butyl-6-(5-chloro-2H-benzotriazole-2-yl)-phenol (UVINUL^{™}3027), 2-(2H-benzotriazole-2-yl)-4,6-di-tert-pentylphenol (UVINUL^{™}3028), 2-(2H-benzotriazole-2-yl)-4-(1,1,3,3-tetramethylbutyl)-phenol (UVINUL^{™}3029), 1,3-bis[(2'cyano-3,3'-diphenylacryloyl)oxy]-2,2-bis-{[(2'-cyano-3,3'-diphenylacryloyl)oxy]methyl}-propane (UVINUL^{™}3030), 2-(2H-benzotriazole-2-yl)-4-methylphenol (UVINUL^{™}3033), 2-(2H-benzotriazole-2-yl)-4,6-bis(1-methyl-1-phenyethyl)phenol (UVINUL^{™}3034), ethyl-2-cyano-3,3-diphenylacrylate (UVINUL^{™}3035), (2-ethylhexyl)-2-cyano-3,3-diphenylacrylate (UVINUL^{™}3039), N,N'-bisformyl-N,N'-bis(2,2,6,6-tetramethyl-4-piperidinyl)hexamethylendiamine (UVINUL^{™}4050H), bis-(2,2,6,6-tetramethyl-4-piperidyl)-sebacate (UVINUL^{™}4077H), bis-(1,2,2,6,6-pentamethyl-4-piperdiyl)-sebacate + methyl-(1,2,2,6,6-pentamethyl-4-piperidyl)-sebacate (UVINUL^{™}4092H) 1,3-bis[(2-cyano-3,3-diphenylacryloyl)oxy]-2,2-bis[[(2-cyano-3, 3-diphenylacryloyl)oxy]methyl]propane (UVINUL^{™} 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; 2-(4,6-Diphenyl-1,3,5-triazin-2-yl)-5- hexyloxy- phenol (TINUVIN^{™} 1577); 2-(2H-benzotriazol-2-yl)-4,6-bis(1-methyl-1-phenylethyl)phenol (TINUVIN^{™} 234); 2-[4,6-Bis(2,4-dimethylphenyl)-1,3,5- triazin-2-yl] ]-5-(octyloxy)phenol (CHIGUARD^{®} 1064); 2,2'-Methylene bis(6-(2H-benzotriazol-2-yl)-4-,1,1,3,3,tetramethylbutyl)phenol) (CHIGUARD^{®} 5431); nano-size inorganic materials such as titanium oxide, cerium oxide, and zinc oxide, all with particle size less than or equal to 100 nanometers; or the like, or combinations comprising at least one of the foregoing light stabilizers. The light stabilizers can be present in an amount of 0.01 to 10 wt%, specifically, 0.05 to 8 wt%, more specifically 0.06 to 7.75 wt%, even more specifically 0.06 to 4 wt%, mostspecifically 4 to 8 wt%, with 0.01 to 0.5 wt%, prefarbly 0.1 to 0.5 wt%, more prefarbly 0.1 to 0.2 wt% being particularly preferred, based upon the total weight of the composition.

In an embodiment, the composition can exclude or be substantially free of components other than the first poly(aliphatic ester-carbonate), the second poly(aliphatic ester-carbonate), the mold release agent, the thermal stabilizer, and the chain extender described herein. In another embodiment, the composition can exclude or be substantially free of components other than the first poly(aliphatic ester-carbonate), the second poly(aliphatic ester-carbonate), the mold release agent, the thermal stabilizer, the chain extender, and a light stabilizer. In this context, the term "substantially free" means that other additive component are not intentionally added to the composition.

The polycarbonate composition can be manufactured by various methods known in the art. For example, powdered polycarbonate, and other optional components are first blended, optionally with any fillers, in a high speed mixer or by hand mixing. The blend is then fed into the throat of a twin-screw extruder via a hopper. Alternatively, at least one of the components can be incorporated into the composition by feeding it directly into the extruder at the throat or downstream through a sidestuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

The composition has an average MVR of less than 40 cc/10 min, preferably less than 30 cc/10 min, more preferably less than 15 cc/10 min, even more preferably less than 10 cc/10 min, most preferably 9 cc/10 min, with 8 cc/10 min being particularly preferred, when measured at 300°C at a shear load of 1.2 kg, dwell 300 seconds, in accordance with ASTM 1238.

The composition also has an average MVR of less than 40 cc/10 min, preferably less than 30 cc/10 min, more preferably less than 20 cc/10 min, most preferably less than 8 cc/10 min when measured at 250°C at a shear load of 5.0 kg, dwell 300 seconds, in accordance with ASTM 1238.

The composition, as compared to the same composition further comprising a bisphenol A homopolycarbonate, is embossable at temperature that is at least 5°C lower, preferably at least 10°C lower, more preferably at least 15°C lower, when measured at a line speed of 0.5 meters per minute. In an embodiment, the composition, as compared to the same composition further comprising a bisphenol A homopolycarbonate, is embossable at temperature that is at least 5% less, preferably at least 10% less, more preferably at least 15% less, when measured at a line speed of 0.5 meters per minute.

The composition, as compared to the same composition further comprising an unbranched bisphenol A homopolycarbonate, is embossable at temperature that is at least 5°C lower, preferably at least 10°C lower, more preferably at least 15°C lower, when measured at a line speed of 0.5 meters per minute (m/min), 0.6 m/min, or 0.7 m/min. In an embodiment, the composition, as compared to the same composition further comprising an unbranched bisphenol A homopolycarbonate, is embossable at temperature that is at least 5% less, preferably at least 10% less, more preferably at least 15% less, when measured at a line speed of 0.5 m/min, 0.6 m/min, or 0.7 m/mmin.

The composition can have an notched Izod impact strength of greater than 750 Joules per meter (J/m), preferably greater than 800 J/m, more preferably greater than 850 J/m, even more preferably greater than 875 J/m, most preferably greater than 890 J/m, with greater than 900 J/m, specifically greater than 910 J/m, more specifically greater than 920 J/m, even more specifically greater than 930 J/m, moste specifically greater than 940 J/m being particularly preferred, when measured on a sample bar molded from the composition and having a thickness of 3.2 millimeters, in accordance with ASTM D256.

The composition can further have a tensile modulus of elasticity of greater than 2,000 megapascals (MPa), preferably greater than 2,100 MPa, more preferably greater than 2,110 MPa, even more preferably greater than 2,120 MPa, most preferably greater than 2,130 MPa, with greater than 2,140 MPa, specifically greater than 2,150 MPa being particularly preferred, when measured in accordance with ASTM D638.

The composition can further have a tensile stress at yield of greater than 50 MPa, preferably greater than 55 MPa, more preferably greater than 56 MPa, even more preferably greater than 57 MPa, most preferably greater than 58 MPa, with greater than 59 MPa being particularly preferred, when measured in accordance with ASTM D638.

The composition can further have a tensile elongation at break of greater than 80% , preferably greater than 90%, more preferably greater than 95%, even more preferably greater than 99%, most preferably greater than 100%, with greater than 105%, specifically greater than 110%, more specifically greater than 115%, even more specifically greater than 120%, most specifically greater than 125% being particularly preferred, or even greater than 130%, or greater than 135%, when measured in accordance with ASTM D638

The composition can further have a heat deflection temperature of greater than or equal to 108°C, preferably greater than or equal to 109°C, more preferably greater than or equal to 110°C, even more preferably greater than or equal to 111°C, most preferably greater than or equal to 112°C, with greater than or equal to 113°C, specifically greater than or equal to 114°C, more specifically greater than or equal to 115°C being particularly preferred, when measured on a sample bar molded from the composition and having a thickness of 3.2 millimeters in accordance with ASTM D648.

Shaped, formed, or molded articles comprising the polycarbonate composition are also provided. In an embodiment, the composition can be extruded to manufacture a layer, and the layer can be further embossed to form an embossed layer. The polycarbonate composition can be molded into useful shaped articles by a variety of methods, such as injection molding, extrusion, rotational molding, blow molding, and thermoforming. Some examples of articles include embossed films, computer and business machine housings such as housings for monitors, handheld electronic device housings such as housings for cell phones, electrical connectors, and components of lighting fixtures, ornaments, home appliances, roofs, greenhouses, sun rooms, swimming pool enclosures, and the like.

The polycarbonate composition is further illustrated by the following nonlimiting examples.

### EXAMPLES

The components in Table 1 are used in the examples. Unless specifically indicated otherwise, the amount of each component is in weight percent in the following examples, based on the total weight of the composition.

**Table 1.**

| **Acronym** | **Description** | **Source** |
|---|---|---|
| PETS | Pentaerythritol tetrastearate (mold release agent) | Longsha (China) |
| GMS | Glycerol monostearate (mold release agent) | Riken Vitamin |
| U3030 | Uvinul 3030 (light stabilizer) | BASF |
| PCCD | Poly(1,4-cyclohexane-dimethanol-1,4-cyclohexane dicarboxylate) copolyester, viscosity = 2000 poise | Eastman |
| ADR | Epoxy-functionalized styrene-acrylic oligomer (Joncryl ADR 4368CS (low volatility chain extender)) | BASF |
| PAEC-1 (high) | Sebacic acid/bisphenol A poly(aliphatic ester-carbonate) with p-cumyl phenol endcaps, Mw = 70,000 Daltons | SABIC |
| PAEC-2 (low) | Sebacic acid/bisphenol A polycarbonate-ester with p-cumyl phenol endcaps, Mw -= 42,000 Daltons | SABIC |
| Ph Acid | Phosphoric acid (45%), diluted in water | Quaron |
| U5431 | Benzotriazole ultraviolet light stabilizer (CHIGUARD 5431) | Chitec |
| PC-1 | BPA homopolycarbonate, Mw = 30,500 Daltons as determined by GPC using polycarbonate standards (PC100) | SABIC |
| PC-2 | BPA homopolycarbonate, Mw = 22,000 Daltons as determined by GPC using polycarbonate standards (PCP1300) | SABIC |
| PC-3 | BPA homopolycarbonate, Mw =17,750 Daltons as determined by GPC using polycarbonate standards | SABIC |
| PC-THPE | Branched BPA homopolycarbonate made using THPE as the branching agent, Mw = 37,700 Daltons as determined by GPC using polycarbonate standards | SABIC |
| PC-Si | BPA polycarbonate-polysiloxane copolymer comprising about 20% by weight of siloxane, 80% by weight BPA and endcapped with para-cumyl phenol | SABIC |

Physical measurements were made using the tests and test methods described in Table 2. Unless indicated otherwise, all tests are the tests in effect in the year 2015. Injection molded test specimens were molded in accordance with ASTM test methods.

**Table 2.**

| **Property** | Units | **Description (Conditions)** | **Test** | **Specimen** |
|---|---|---|---|---|
| MVR (300°C) | cm³/10 min | Melt volume flow rate (300°C, 1.2 kg load, dwell = 300 seconds) | ASTM 1238 | Pellets |
| MVR (250°C) | cm³/10 min | Melt volume flow rate (250 °C, 5 kg load, dwell = 300 seconds) | ASTM 1238 | Pellets |
| Spiral Flow | Cm | SABIC internal testing method | | |
| NII | J/m | Notched Izod Impact Strength (23 °C) | ASTM D 256 | ASTM Impact bar, 3.2 mm thick |
| Tensile Mod. of Elast. | MPa | Tensile: Modulus of elasticity | ASTM D 638 | |
| Tens str. at yield | MPa | Tensile: Stress at yield | ASTM D 638 | |
| Tensile elong. at break | MPa | Tensile: Elongation at break | ASTM D 638 | |
| HDT | °C | Heat deflection temperature, measured at 1.82 MPa | ASTM D648 | 3.2 mm thick bar |

The compositions including the polycarbonates were prepared as follows. The polycarbonates were blended, along with the other components listed in Tables 4 to 6 below, and were then extruded by using a twin extruder. The extruded pellets were molded into standard testing bars for mechanical test. Typical compounding and molding procedures are described as follows.

The extrusion parameters are listed in Table 3. The extruder type for preparing the samples was a twin-screw Toshiba TEM-37BS extruder (with L/D of 40.5, diameter 37 mm, barrel temperature was set at 260 °C from zone 3 to 7 and 265 °C from zone 8 to 11, die temperature was set at 265 °C, with screw speed and output of 300 rpm and 40 kg/h). The twin-screw extruder had enough distributive and dispersive mixing elements to produce good mixing between the polymer compositions. The melt processed compositions exited the extruder through small exit holes in a die. The resulting strands of molten resin were cooled by passing the strands through a water bath. The cooled strands were then chopped into small pellets for packaging and further handling by a pelletizer. The powder and pellets were fed from a throat hopper on the extruder to ensure adequate melting and mixing. The compounded pellets were dried prior to molding.

The extruded pellets were molded into shapes suitable for the applicable mechanical testing. The compositions are subsequently molded according to ISO 294 on a Husky or BOY injection-molding machine. Table 4 lists the molding conditions.

**Table 3.**

| **Parameters** | **Unit** | **Amount** |
|---|---|---|
| Die | mm | 4 |
| Zone 1 Temp | °C | 50 |
| Zone 2 Temp | °C | 150 |
| Zone 3 Temp | °C | 250 |
| Zone 4 Temp | °C | 260 |
| Zone 5 Temp | °C | 260 |
| Zone 6 Temp | °C | 260 |
| Zone 7 Temp | °C | 260 |
| Zone 8 Temp | °C | 265 |
| Zone 9 Temp | °C | 265 |
| Zone 10 Temp | °C | 265 |
| Zone 11 Temp | °C | 265 |
| Die Temp | °C | 265 |
| Screw speed | rpm | 300 |
| Throughput | kg/hr | 40 |
| Melt temperature | °C | 265 |

**Table 4.**

| **Parameters** | **Unit** | **Amount** |
|---|---|---|
| Pre-drying time | Hours | 3 |
| Pre-drying temp | °C | 80 |
| Hopper temp | °C | 50 |
| Zone 1 temp | °C | 270 |
| Zone 2 temp | °C | 270 |
| Zone 3 temp | °C | 270 |
| Nozzle temp | °C | 270 |
| Mold temp | °C | 75 |
| Screw speed | rpm | 100 |
| Back pressure | kgf/cm² | 65 |
| Molding Machine | NONE | FANUC |

The films were extruded at a thickness of 0.15 mm. The extrusion conditions are listed in Table 5.

**Table 5.**

| **Gauge** | **Die temp.** | **Extruder temp.** | **Line speed** | **Extruder screw rotation speed** |
|---|---|---|---|---|
| 0.15 mm | 275 °C | 270°C | 2.2 m/minute | 145 rpm |

Films were embossed at an elevated temperature to obtain a desired texture on the film. Films are desirably amenable to embossing at 255 °C at a line speed of at least 0.6 meters per minute (m/min) or at 235 °C at line speed of at least 0.5 m/min. During the thermal embossing process, the film is initially heating to a melting temperature, cooled at 25°C (optionally using a fan), and subsequently pulled and released from the embossing tool. During the release process, the embossed film desirably has a release performance that enables the embossed film to retain its shape and be suitable for high performance optical applications.

The qualitative release performance was rated from 1 to 5, as shown in Tables 6 to 8. The release performance was evaluated as follows: a rating of 1 denotes the embossed film sticks on the embossing tool and release was difficult; a rating of 2 denotes that the embossed film sticks on the embossing tool, but release was superior to a rating of 1; a rating of 3 denotes that the embossed film sticks to the embossing tool less than at a rating of 2, but the quality of the embossed film is otherwise acceptable; a rating of 4 means the embossed film can be released from embossing tool without sticking, having a desirable shape and texture; a rating of 5 denotes the optimal release performance and yields an embossed film of desirable shape and texture.

### Examples 1-1 to 1-5

The thermal embossing properties of films prepared with the polymer compositions were evaluated, and the results are shown in Table 6.

**Table 6.**

| **Component** | **Unit** | **1-1** | **1-2** | **C1-3** | **C1-4** | **C1-5** |
|---|---|---|---|---|---|---|
| PETS | % | 0.13 | 0.13 | | 0.13 | 0.13 |
| Stabilizer package | % | 0.06 | 0.06 | | 0.06 | 0.06 |
| U3030 | % | 7.75 | | | 7.75 | 7.75 |
| PCCD | % | | | 25 | | |
| PC-3 | % | | | 74.95 | | |
| ADR | % | 0.1 | 0.1 | | | |
| PAEC-1 (high) | % | 39.8 | 12.75 | | | |
| PAEC-2 (low) | % | 52.16 | 89.96 | | | |
| Ph Acid | % | | | 0.05 | | |
| PC-1 | % | | | | 70.06 | 50.06 |
| PC-2 | % | | | | 22 | 42 |
| **Properties** | | | | | | |
| MVR (300°C) - Avg. | cm³/10 min | 24.3 | 35 | 62.7 | 14.4 | 18.96 |
| MVR (250°C) - Avg. | cm³/10 min | 19.8 | 27.3 | 4.2 | | |
| High temperature thermal embossing | 255°C at 0.6 ~ 0.7 m/minute | OK | OK | Fail | OK but at 0.4 m/minute | OK but at 0.4 m/minute |
| | Release rating^{∗} | 3 | 2 | 1 | 3 | 3 |
| | 235°C at 0.5 m/minute | OK | OK | ** | Fail | Fail |
| | Release rating | 4 | 3 | 1 | 3 | 3 |

| | | | | | | |
|---|---|---|---|---|---|---|
| ^{∗}5>4>3>2>1, where 5 is best, 1 is worst ^{∗∗}Embossed, but too sticky; fail | | | | | | |

Table 6 shows the results obtained with Examples 1-and 1-2, and Comparative Examples C1-3 to C1-5. Comparative Example C1-3 is a film that includes a low molecular weight homopolycarbonate (PC-3) and 25 wt% of PCCD, and this was not suitable for use in the described thermal embossing process, although it is usually considered a high replication rate film. Comparative Examples C1-4 and C1-5 are films including two different ratios of homopolycarbonates (PC-1 and PC-2), and these films did not have the desired release performance when processed at 255°C at a line speed of 0.6-0.7 m/min or at 235°C at a line speed of 0.5 m/min.

In Examples 1-1 and 1-2, films were prepared from compositions having two different ratios of a blend of the high molecular weight (PAEC-1) and low molecular weight (PAEC-2) sebacic acid/bisphenol A poly(aliphatic ester-carbonate)s. The films from Examples 1 and 2 had satisfactory release performance when processed at 255°C at a line speed of 0.6-0.7 m/min and at 235°C at a line speed of 0.5 m/min. Better performance was obtained using a higher relative proportion of the higher molecular weight poly(aliphatic ester-carbonate). It was observed, however, the films were still slightly sticky. The films of Examples 1-1 and 1-2 were visually transparent.

### Examples 2-1 to 2-3

The thermal embossing properties of films prepared with three additional polymer compositions were evaluated, and the results are shown in Table 7.

**Table 7.**

| **Component** | **Unit** | **2-1** | **2-2** | **C2-3** |
|---|---|---|---|---|
| PETS | % | 0.13 | 0.13 | 0.13 |
| Stabilizer package | % | 0.06 | 0.06 | 0.06 |
| PC-THPE | % | | | 99.81 |
| ADR | % | 0.1 | 0.1 | |
| PAEC-1 (high) | % | 43.55 | 72.71 | |
| PAEC-2 (low) | % | 52.16 | 27 | |
| U5431 | % | 4 | | |
| Properties | | | | |
| MVR (300°C) - Avg. | cm³/10 min | 21.6 | 8.96 | 57.7 |
| MVR (250°C) - Avg. | cm³/10 min | 17 | 7.47 | 45.763 |
| High temperature thermal embossing | 255°C at 0.6 ~ 0.7 m/minute | OK | OK | Fail |
| | Release rating^{∗} | 2 | 3 | |
| | 235°C at 0.5 m/minute | OK | OK | Fail |
| | Release rating^{∗} | 2 | 3 | |

| | | | | |
|---|---|---|---|---|
| ^{∗}5>4>3>2>1, where 5 is best, 1 is worst | | | | |

Table 7 shows the results obtained with Examples 2-1 and 2-2, and Comparative Example C2-3. The films of Examples 2-1 and 2-2, prepared from compositions having two different ratios of a blend of the high molecular weight (PAEC-1) and low molecular weight (PAEC-2) sebacic acid/bisphenol A poly(aliphatic ester-carbonate)s, had satisfactory release performance when processed at 255°C at a line speed of 0.6-0.7 m/min and at 235°C at a line speed of 0.5 m/min. Better performance was obtained using a higher relative proportion of the higher weight poly(aliphatic ester-carbonate).

Inferior performance was observed in Comparative Example C2-3, using a composition prepared from a branched bisphenol A homopolycarbonate (PC-THPE), and the film did not have the desired release performance when processed at 255°C at a line speed of 0.6-0.7 m/min or at 235°C at a line speed of 0.5 m/min.

### Examples 3-1 to 3-6

The mechanical and thermal embossing properties of films prepared with six additional compositions were evaluated as shown in Table 8. The properties were determined using injection molded samples.

**Table 8.**

| **Component** | **Unit** | **3-1** | **3-2** | **3-3** | **3-4** | **3-5** | **3-6** |
|---|---|---|---|---|---|---|---|
| PETS | % | 0.13 | 0.13 | | | | |
| Stabilizer package | % | 0.06 | 0.06 | 0.06 | 0.06 | 0.06 | 0.06 |
| ADR | % | 0.1 | 0.1 | 0.1 | 0.1 | 0.1 | 0.1 |
| PAEC-1 (high) | % | 45.71 | 45.65 | 45.74 | 25.74 | 72.74 | 25.74 |
| PAEC-2 (low) | % | 54 | 54 | 54 | 54 | 27 | 54 |
| GMS | % | | 0.06 | 0.1 | 0.1 | 0.1 | 0.1 |
| PC-THPE | % | | | | 20 | | |
| PC-Si | % | | | | | | 20 |

| **Properties** | | | | | | | |
|---|---|---|---|---|---|---|---|
| MVR 300°C - Avg. | cm/10 min | 12.8 | 13 | 12.8 | 10 | 7.43 | 16 |
| Spiral flow length | cm | 7.36 | 7.4 | 6.94 | 6.06 | 4.32 | 8.06 |
| Release rate in embossing: trial in laboratory line | | 1 | 3 | 3 | 3 | 4 | 1 |
| High temperature thermal embossing (manufacturing scale) | 255°C at 0.6 ~ 0.7 m/minute | OK | OK | OK | OK | OK | OK |
| | Release rating^{∗} | 2 | 2 | 3 | 4 | 4 | 2 |
| | 235°C at 0.5 m/minute | OK | OK | OK | OK | OK | OK |
| | Release rating^{∗} | 2 | 3 | 4 | 4 | 5 | 2 |
| NII: Notch. Izod Imp. strength | J/m | 880 | 890 | 882 | 845 | 943 | 896 |
| Standard deviation | - | 21.2 | 30.5 | 26.6 | 49.5 | 24.5 | 13.1 |
| Tensile: Mod of Elasticity - Avg. | MPa | 2136.4 | 2134.8 | 2124.4 | 2149.8 | 2117 | 2148.4 |
| Standard deviation | - | 6.387 | 8.228 | 9.555 | 11.606 | 10.1 | 4.336 |
| Tensile: Stress at Yield - Avg. | MPa | 57.1 | 57.8 | 57.6 | 58.4 | 57 | 57.5 |
| Standard deviation | - | 0.259 | 0.259 | 0.277 | 0.114 | 0.416 | 0.249 |
| Tensile: Elong. at Break - Avg. | % | 104.45 | 84.5 | 108.21 | 107.5 | 135.62 | 112.23 |
| Standard deviation | - | 17 | 27 | 9 | 5.6 | 21 | 9.2 |
| Heat Deflection Temp - Avg. | °C | 110 | 110 | 111 | 115 | 112 | 112 |

| | | | | | | | |
|---|---|---|---|---|---|---|---|
| ^{∗}5>4>3>2>1, where 5 is best, 1 is worst | | | | | | | |

Table 6 shows the results obtained for Examples 3-1 to 3-6. The films of Examples 3-1, 3-2, 3-3 were prepared from compositions having 54 wt% of the lower molecular weight and 45.71 wt% of the higher molecular weight poly(aliphatic ester-carbonate)s.. The mechanical properties of these films were comparable and suitable for embossing applications.

In Example 3-1, PETS was used as the mold release agent, whereas in Example 3-2, both PETS and GMS were used as mold release agents. In the high temperature thermal embossing process, the films of Examples 3-1 and 3-2 had comparable release performance when processed at 255°C at a line speed of 0.6-0.7 m/min, while the film of Example 3-2 showed an improved release performance at 235°C at a line speed of 0.5 m/min. In Example 3-3, GMS was used as the mold release agent, and the release performance of the resulting film was better than the release performance for Examples 3-1 and 3-2, both when processed at 255°C at a line speed of 0.6-0.7 m/min and at 235°C at a line speed of 0.5 m/min.

The film of Example 3-4 was prepared from a composition having 54 wt% of the lower molecular weight and 25.74 wt% of the higher molecular weight poly(aliphatic ester-carbonate)s, 20 wt% of a THPE-branched polycarbonate, and GMS. The release properties of the resulting film when processed at 255°C at a line speed of 0.6-0.7 m/min and at 235°C at a line speed of 0.5 m/min were both improved relative to Examples 3-1 to 3-3.

The film of Example 3-5 was prepared from a composition having 27 wt% of the lower molecular weight and 72.74 wt% of the higher molecular weight poly(aliphatic ester-carbonate)s, and GMS. The release properties of the resulting film when processed at both 255°C at a line speed of 0.6-0.7 m/min and 235°C at a line speed of 0.5 m/min were improved relative to Examples 3-1 to 3-4.

The film of Example 3-6 was prepared from a composition having 54 wt% of the lower molecular weight and 25.74 wt% of the higher molecular weight poly(aliphatic ester-carbonate)s, 20 wt% of a poly(carbonate-siloxane), and GMS. The release properties of the resulting film when processed at both 255°C at a line speed of 0.6-0.7 m/min and 235°C at a line speed of 0.5 m/min were comparable to Example 3-1.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments.

Unless defined otherwise, technical and scientific terms used herein have the same meaning as is commonly understood by one of skill in the art to which this application belongs.

As used herein, the term "hydrocarbyl" includes groups containing carbon, hydrogen, and optionally one or more heteroatoms (e.g., 1, 2, 3, or 4 atoms such as halogen, O, N, S, P, or Si). "Alkyl" means a branched or straight chain, saturated, monovalent hydrocarbon group, e.g., methyl, ethyl, i-propyl, and n-butyl. "Alkylene" means a straight or branched chain, saturated, divalent hydrocarbon group (e.g., methylene (-CH₂-) or propylene (-(CH₂)₃-)). "Alkenyl" and "alkenylene" mean a monovalent or divalent, respectively, straight or branched chain hydrocarbon group having at least one carbon-carbon double bond (e.g., ethenyl (-HC=CH₂). "Alkynyl" means a straight or branched chain, monovalent hydrocarbon group having at least one carbon-carbon triple bond (e.g., ethynyl). "Alkoxy" means an alkyl group linked via an oxygen (i.e., alkyl-O-), for example methoxy. "Cycloalkyl" and "cycloalkylene" mean a monovalent and divalent cyclic hydrocarbon group, respectively, of the formula -CₙH₂ₙ₋ₓ and -CₙH₂ₙ₋₂ₓ- wherein x is the number of cyclizations. "Aryl" means a monovalent, monocyclic, or polycyclic aromatic group (e.g., phenyl or naphthyl). "Arylene" means a divalent, monocyclic, or polycyclic aromatic group. "Alkylarylene" means an arylene group substituted with an alkyl group. "Arylalkylene" means an alkylene group substituted with an aryl group (e.g., benzyl). The prefix "halo" means a group or compound including one more halogen (F, Cl, Br, or I) substituents, which can be the same or different. The prefix "hetero" means a group or compound that includes at least one ring member that is a heteroatom (e.g., 1, 2, or 3 heteroatoms, wherein each heteroatom is independently N, O, S, or P.

"Substituted" means that the compound or group is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkylene (e.g., benzyl), C₇₋₁₂ alkylarylene (e.g., toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), provided that the substituted atom's normal valence is not exceeded, and that the substitution does not significantly adversely affect the manufacture, stability, or desired property of the compound. When a compound is substituted, the indicated number of carbon atoms is the total number of carbon atoms in the group, including those of any substituents.

## Claims

1. A thermoplastic composition, comprising, based on a total weight of the composition:
at least 15 weight percent, preferably at least 20 weight percent, of a first poly(aliphatic ester-carbonate) having a first weight average molecular weight, wherein the weight average molecular weight of the first poly(aliphatic ester-carbonate) is 50,000 to 80,000 grams per mole, preferably 65,000 to 75,000 grams per mole, when measured by gel permeation chromatography using bisphenol A homopolycarbonate standards;
at least 10 weight percent, preferably at least 20 weight percent of a second poly(aliphatic ester-carbonate) having a second weight average molecular weight that is lower than the first weight average molecular weight, wherein the weight average molecular weight of the second poly(aliphatic ester-carbonate) is 30,000 to 50,000 grams per mole, preferably 36,000 to 45,000 grams per mole, when measured by gel permeation chromatography using bisphenol A homopolycarbonate standards;
0.01 to 0.5 weight percent of a mold release agent;
0.01 to 0.5 weight percent of a thermal stabilizer; and
0.01 to 0.5 weight percent of a chain extender,
wherein the foregoing amounts total 100 weight percent, and are based on the total weight of the composition, and
wherein the thermoplastic composition has
an average melt volume flow rate of less than 40 cubic centimeters per 10 minutes, preferably less than 30 cubic centimeters per 10 minutes, when measured at 300°C at a shear load of 1.2 kg, dwell 300 seconds, in accordance with ASTM 1238, and
an average melt volume flow rate of less than 40 cubic centimeters per 10 minutes, preferably less than 30 cubic centimeters per 10 minutes when measured at 250°C at a shear load of 5.0 kg, dwell 300 seconds, in accordance with ASTM 1238.

2. The composition of claim 1, wherein the composition is embossable at a temperature that is at least 5°C lower, preferably at least 10°C lower, than the same composition further comprising an unbranched bisphenol A homopolycarbonate, when measured at a line speed of 0.5 meters per minute.

3. The composition of claim 1 or 2, wherein the composition has:
a notched Izod impact strength of greater than 750 Joules per meter, preferably greater than 800 Joules per meter, when measured on a sample bar molded from the composition and having a thickness of 3.2 millimeters, in accordance with ASTM D256,
a tensile modulus of elasticity of greater than 2,000 megapascals, preferably greater than 2,100 megapascals, when measured in accordance with ASTM D638,
a tensile stress at yield of greater than 50 megapascals, preferably greater than 55 megapascals, when measured in accordance with ASTM D638,
a tensile elongation at break of greater than 80%, preferably greater than 90%, when measured in accordance with ASTM D638, and
a heat deflection temperature of greater than or equal to 108°C, when measured on a sample bar molded from the composition and having a thickness of 3.2 millimeters in accordance with ASTM D648.

4. The composition of any one or more of claims 1 to 3, wherein
the aliphatic ester units in the first and the second poly(aliphatic ester-carbonate) are each derived from sebacic acid, and are present in each poly(aliphatic ester-carbonate) in an amount of 5 to 10 mole percent, preferably 6 to 9 mole percent, based on 100 mole percent of each poly(aliphatic ester-carbonate), and
the carbonate units are derived from bisphenol A.

5. The composition of any one or more of claims 1 to 4, wherein the mold release agent is glycerol monostearate, pentaerythritol tetrastearate, or a combination comprising at least one of the foregoing, or wherein the mold release agent is glycerol monostearate.

6. The composition of any one or more of claims 1 to 5, further comprising:
5 to 30 weight percent, preferably 10 to 30 weight percent of a branched homopolycarbonate; or
10 to 30 weight percent, preferably 5 to 25 weight percent of a polycarbonate-polysiloxane copolymer.

7. The composition of any one or more of claims 1 to 5, comprising
15 to 80 weight percent, preferably 20 to 60 weight percent of the first poly(aliphatic ester-carbonate);
10 to 80 weight percent, preferably 20 to 60 weight percent of the second poly(aliphatic ester-carbonate);
0 to 50 weight percent, preferably 10 to 50 weight percent of a branched bisphenol A homopolycarbonate;
0.01 to 0.5 weight percent of the mold release agent, preferably glycerol monostearate;
0.01 to 0.5 weight percent of the thermal stabilizer;
0.01 to 0.5 weight percent of the chain extender; and
0.01 to 8 weight percent of a light stabilizer,
wherein the composition has an average melt volume flow rate of less than 15 cubic centimeters per 10 minutes when measured at 300°C at a shear load of 1.2 kg, dwell 300 seconds, in accordance with ASTM 1238.

8. The composition of any one or more of claims 1 to 5, comprising
15 to 35 weight percent preferably or 20 to 30 weight percent of the first poly(aliphatic ester-carbonate);
40 to 75 weight percent, preferably 45 to 70 weight percent of the second poly(aliphatic ester-carbonate);
10 to 30 weight percent, preferably 15 to 25 weight percent of a branched bisphenol A homopolycarbonate;
0.01 to 0.5 weight percent of the mold release agent, preferably glycerol monostearate;
0.01 to 0.5 weight percent of the thermal stabilizer;
0.01 to 0.5 weight percent of the chain extender; and
0.01 to 8 weight percent of a light stabilizer,
wherein the composition has an average melt volume flow rate of less than 15 cubic centimeters per 10 minutes when measured at 300°C at a shear load of 1.2 kg, dwell 300 seconds, in accordance with ASTM 1238.

9. The composition of any one or more of claims 1 to 5, comprising
60 to 90 weight percent, preferably 65 to 85 weight percent of the first poly(aliphatic ester-carbonate);
10 to 40 weight percent, preferably 15 to 35 weight percent of the second poly(aliphatic ester-carbonate);
0.01 to 0.5 weight percent of the mold release agent, preferably glycerol monostearate;
0.01 to 0.5 weight percent of the thermal stabilizer;
0.01 to 0.5 weight percent of the chain extender; and
0.01 to 8 weight percent of a light stabilizer,
wherein the composition has an average melt volume flow rate of less than 10 cubic centimeters per 10 minutes when measured at 300°C at a shear load of 1.2 kg, 360 seconds, in accordance with ASTM 1238 .

10. A method for the manufacture of the composition of any one or more of claims 1 to 9, the method comprising:
melt blending the first poly(aliphatic ester-carbonate), the second poly(aliphatic ester-carbonate), the mold release agent, the thermal stabilizer, and the chain extender.

11. A method for the manufacture of a layer, the method comprising extruding the composition of any one or more of claims 1 to 9 to form the layer.

12. The method of claim 11, wherein the layer has a thickness of 2 to 5,000 micrometers, preferably 5 to 1,000 micrometers.

13. A method for the manufacture of an embossed layer, the method comprising thermally embossing the layer of claim 11 or 12 at a line speed line speed of 0.45 meters per minute, preferably 0.5 meters per minute, at 235 to 255°C.

14. An article comprising the composition of any one or more of claims 1 to 9, the composition made by the method of claim 11, or the layer manufactured by the method of any one or more of claims 11 to 13.

15. The article of claim 14, wherein the article is a layer, or an embossed layer, or an embossed retroreflective layer.

## Patentansprüche

1. Eine thermoplastische Zusammensetzung, die, basierend auf einem Gesamtgewicht der Zusammensetzung, Folgendes umfasst:
mindestens 15 Gewichtsprozent, vorzugsweise mindestens 20 Gewichtsprozent, eines ersten Poly(aliphatischen-Ester-Carbonats), das ein erstes Gewichtsmittelmolekulargewicht hat, wobei das Gewichtsmittelmolekulargewicht des ersten Poly(aliphatischen-Ester-Carbonats) 50.000 bis 80.000 Gramm pro mol, vorzugsweise 65.000 bis 75.000 Gramm pro mol, beträgt, gemessen durch Gelpermeationschromatographie unter Anwendung von Bisphenol A-Homopolycarbonat-Standards;
mindestens 10 Gewichtsprozent, vorzugsweise mindestens 20 Gewichtsprozent, eines zweiten Poly(aliphatischen-Ester-Carbonats), das ein zweites Gewichtsmittelmolekulargewicht hat, welches niedriger ist als das erste Gewichtsmittelmolekulargewicht, wobei das Gewichtsmittelmolekulargewicht des zweiten Poly(aliphatischen-Ester-Carbonats) 30.000 bis 50.000 Gramm pro mol, vorzugsweise 36.000 bis 45.000 Gramm pro mol, beträgt, gemessen durch Gelpermeationschromatographie unter Anwendung von Bisphenol A-Homopolycarbonat-Standards;
0,01 bis 0,5 Gewichtsprozent eines Formtrennmittels,
0,01 bis 0,5 Gewichtsprozent eines Wärmestabilisators und
0,01 bis 0,5 Gewichtsprozent eines Kettenverlängerers, wobei die oben genannten Mengen insgesamt 100 Gewichtsprozent ausmachen, basierend auf dem Gesamtgewicht der Zusammensetzung, und
wobei die thermoplastische Zusammensetzung Folgendes hat:
eine durchschnittliche Schmelze-Volumenfließrate von weniger als 40 Kubikzentimetern je 10 Minuten, vorzugsweise weniger als 30 Kubikzentimetern je 10 Minuten, gemessen bei 300°C unter einer Scherbelastung von 1,2 kg, Verweilzeit 300 Sekunden, gemäß ASTM 1238, und
eine durchschnittliche Schmelze-Volumenfließrate von weniger als 40 Kubikzentimetern je 10 Minuten, vorzugsweise weniger als 30 Kubikzentimetern je 10 Minuten, gemessen bei 250°C unter einer Scherbelastung von 5,0 kg, Verweilzeit 300 Sekunden, gemäß ASTM 1238.

2. Die Zusammensetzung gemäß Anspruch 1, die bei einer Temperatur geprägt werden kann, welche mindestens 5°C niedriger, vorzugsweise mindestens 10°C niedriger, ist als dieselbe Zusammensetzung, die weiter ein unverzweigtes Bisphenol A-Homopolycarbonat umfasst, gemessen bei einer Liniengeschwindigkeit von 0,5 Metern pro Minute.

3. Die Zusammensetzung gemäß Anspruch 1 oder 2, die Folgendes hat:
eine Izod-Kerbschlagzähigkeit von mehr als 750 Joules pro Meter, vorzugsweise mehr als 800 Joules pro Meter, gemessen gemäß ASTM D256 an einer aus der Zusammensetzung geformten Musterstange mit einer Dicke von 3,2 Millimetern,
einen Elastizitätsmodul von mehr als 2.000 Megapascal, vorzugsweise mehr als 2.100 Megapascal, gemessen nach ASTM D638,
eine konventionelle Streckgrenze von mehr als 50 Megapascal, vorzugsweise mehr als 55 Megapascal, gemessen nach ASTM D638,
eine Verlängerung bei Zugbeanspruchung von mehr als 80%, vorzugsweise mehr als 90%, gemessen nach ASTM D638, und
eine Wärmeformbeständigkeit von mindestens 108°C, gemessen nach ASTM D648 an einer aus der Zusammensetzung geformten Musterstange mit einer Dicke von 3,2 Millimetern.

4. Die Zusammensetzung gemäß einem oder mehreren der Ansprüche 1 bis 3, worin
die aliphatischen Estereinheiten im ersten und zweiten Poly(aliphatischen-Ester-Carbonat) jeweils von Sebacinsäure abgeleitet sind und in jedem Poly(aliphatischen-Ester-Carbonat) in einer Menge von 5 bis 10 Molprozent, vorzugsweise 6 bis 9 Molprozent, vorliegen, basierend auf 100 Molprozent jedes Poly(aliphatischen-Ester-Carbonats), und
die Carbonateinheiten von Bisphenol A abgeleitet sind.

5. Die Zusammensetzung gemäß einem oder mehreren der Ansprüche 1 bis 4, wobei das Formtrennmittel Glycerolmonostearat, Pentaerythritoltetrastearat oder eine Kombination ist, die mindestens eines der oben Genannten umfasst, oder wobei das Formtrennmittel Glycerolmonostearat ist *(sic).*

6. Die Zusammensetzung gemäß einem oder mehreren der Ansprüche 1 bis 5, die weiter Folgendes umfasst:
5 bis 30 Gewichtsprozent, vorzugsweise 10 bis 30 Gewichtsprozent, eines verzweigten Homopolycarbonats oder
10 bis 30 Gewichtsprozent, vorzugsweise 5 bis 25 Gewichtsprozent, eines Polycarbonat-Polysiloxan-Copolymers.

7. Die Zusammensetzung gemäß einem oder mehreren der Ansprüche 1 bis 5, die Folgendes umfasst:
15 bis 80 Gewichtsprozent, vorzugsweise 20 bis 60 Gewichtsprozent, des ersten Poly(aliphatischen-Ester-Carbonats);
10 bis 80 Gewichtsprozent, vorzugsweise 20 bis 60 Gewichtsprozent, des zweiten Poly(aliphatischen-Ester-Carbonats);
0 bis 50 Gewichtsprozent, vorzugsweise 10 bis 50 Gewichtsprozent, eines verzweigten Bisphenol A-Homopolycarbonats;
0,01 bis 0,5 Gewichtsprozent des Formtrennmittels, vorzugsweise Glycerolmonostearat;
0,01 bis 0,5 Gewichtsprozent des Wärmestabilisators;
0,01 bis 0,5 Gewichtsprozent des Kettenverlängerers und
0,01 bis 8 Gewichtsprozent eines Lichtstabilisators,
wobei die Zusammensetzung eine durchschnittliche Schmelze-Volumenfließrate von weniger als 15 Kubikzentimetern je 10 Minuten hat, gemessen bei 300°C unter einer Scherbelastung von 1,2 kg, Verweilzeit 300 Sekunden, gemäß ASTM 1238.

8. Die Zusammensetzung gemäß einem oder mehreren der Ansprüche 1 bis 5, die Folgendes umfasst:
15 bis 35 Gewichtsprozent, vorzugsweise 20 bis 30 Gewichtsprozent, des ersten Poly(aliphatischen-Ester-Carbonats);
40 bis 75 Gewichtsprozent, vorzugsweise 45 bis 70 Gewichtsprozent, des zweiten Poly(aliphatischen-Ester-Carbonats);
10 bis 30 Gewichtsprozent, vorzugsweise 15 bis 25 Gewichtsprozent, eines verzweigten Bisphenol A-Homopolycarbonats;
0,01 bis 0,5 Gewichtsprozent des Formtrennmittels, vorzugsweise Glycerolmonostearat;
0,01 bis 0,5 Gewichtsprozent des Wärmestabilisators;
0,01 bis 0,5 Gewichtsprozent des Kettenverlängerers und
0,01 bis 8 Gewichtsprozent eines Lichtstabilisators,
wobei die Zusammensetzung eine durchschnittliche Schmelze-Volumenfließrate von weniger als 15 Kubikzentimetern je 10 Minuten hat, gemessen bei 300°C unter einer Scherbelastung von 1,2 kg, Verweilzeit 300 Sekunden, gemäß ASTM 1238.

9. Die Zusammensetzung gemäß einem oder mehreren der Ansprüche 1 bis 5, die Folgendes umfasst:
60 bis 90 Gewichtsprozent, vorzugsweise 65 bis 85 Gewichtsprozent, des ersten Poly(aliphatischen-Ester-Carbonats);
10 bis 40 Gewichtsprozent, vorzugsweise 15 bis 35 Gewichtsprozent, des zweiten Poly(aliphatischen-Ester-Carbonats);
0,01 bis 0,5 Gewichtsprozent des Formtrennmittels, vorzugsweise Glycerolmonostearat;
0,01 bis 0,5 Gewichtsprozent des Wärmestabilisators;
0,01 bis 0,5 Gewichtsprozent des Kettenverlängerers und
0,01 bis 8 Gewichtsprozent eines Lichtstabilisators, wobei die Zusammensetzung eine durchschnittliche Schmelze-Volumenfließrate von weniger als 10 Kubikzentimetern je 10 Minuten hat, gemessen bei 300°C unter einer Scherbelastung von 1,2 kg, 360 Sekunden, gemäß ASTM 1238.

10. Ein Verfahren zur Herstellung der Zusammensetzung gemäß einem oder mehreren der Ansprüche 1 bis 9, wobei das Verfahren Folgendes umfasst:
das Schmelzmischen des ersten Poly(aliphatischen-Ester-Carbonats), des zweiten Poly(aliphatischen-Ester-Carbonats), des Formtrennmittels, des Wärmestabilisators und des Kettenverlängerers.

11. Ein Verfahren zur Herstellung einer Schicht, wobei das Verfahren das Extrudieren der Zusammensetzung gemäß einem oder mehreren der Ansprüche 1 bis 9, um die Schicht zu bilden, umfasst.

12. Das Verfahren gemäß Anspruch 11, wobei die Schicht eine Dicke von 2 bis 5.000 Mikrometern, vorzugsweise 5 bis 1.000 Mikrometern, hat.

13. Ein Verfahren zur Herstellung einer geprägten Schicht, wobei das Verfahren das Wärmeprägen der Schicht gemäß Anspruch 11 oder 12 bei einer Liniengeschwindigkeit von 0,45 Metern pro Minute, vorzugsweise 0,5 Metern pro Minute, bei 235 bis 255°C umfasst.

14. Ein Gegenstand, der die Zusammensetzung gemäß einem oder mehreren der Ansprüche 1 bis 9 umfasst, wobei die Zusammensetzung durch das Verfahren gemäß Anspruch 11 hergestellt wird, oder die Schicht, die durch das Verfahren gemäß einem oder mehreren der Ansprüche 11 bis 13 hergestellt wird.

15. Der Gegenstand gemäß Anspruch 14, wobei der Gegenstand eine Schicht, eine geprägte Schicht oder eine geprägte rückstrahlende Schicht ist.

## Revendications

1. Une composition thermoplastique, comprenant, sur la base d'un poids total de la composition :
au moins 15 pour cent en poids, de préférence au moins 20 pour cent en poids, d'un premier poly(ester-carbonate aliphatique) ayant un premier poids moléculaire moyen en poids, dans laquelle le poids moléculaire moyen en poids du premier poly(ester-carbonate aliphatique) est de 50 000 à 80 000 grammes par mole, de préférence de 65 000 à 75 000 grammes par mole, lorsqu'il est mesuré par chromatographie par perméation de gel en utilisant des étalons d'homopolycarbonate de bisphénol A ;
au moins 10 pour cent en poids, de préférence au moins 20 pour cent en poids d'un second poly(ester-carbonate aliphatique) ayant un second poids moléculaire moyen en poids qui est inférieur au premier poids moléculaire moyen en poids, dans laquelle le poids moléculaire moyen en poids du second poly(ester-carbonate aliphatique) est de 30 000 à 50 000 grammes par mole, de préférence de 36 000 à 45 000 grammes par mole, lorsqu'il est mesuré par chromatographie par perméation de gel en utilisant des étalons d'homopolycarbonate de bisphénol A ;
0,01 à 0,5 pour cent en poids d'un agent de démoulage ;
0,01 à 0,5 pour cent en poids d'un stabilisant thermique ; et
0,01 à 0,5 pour cent en poids d'un allongeur de chaîne,
dans laquelle les quantités susmentionnées représentent 100 pour cent en poids, et sont basées sur le poids total de la composition, et
dans laquelle la composition thermoplastique a
un débit volumique moyen à l'état fondu inférieur à 40 centimètres cubes par 10 minutes, de préférence inférieur à 30 centimètres cubes par 10 minutes, lorsqu'il est mesuré à 300 °C à une charge de cisaillement de 1,2 kg, temps de séjour 300 secondes, conformément à l'ASTM 1238, et
un débit volumique moyen à l'état fondu inférieur à 40 centimètres cubes par 10 minutes, de préférence inférieur à 30 centimètres cubes par 10 minutes lorsqu'il est mesuré à 250 °C à une charge de cisaillement de 5,0 kg, temps de séjour 300 secondes, conformément à l'ASTM 1238.

2. La composition selon la revendication 1, dans laquelle la composition peut être gaufrée à une température qui est au moins 5 °C inférieure, de préférence au moins 10 °C inférieure, à la même composition comprenant en outre un homopolycarbonate de bisphénol A non ramifié, lorsqu'elle est mesurée à une vitesse de ligne de 0,5 mètre par minute.

3. La composition selon la revendication 1 ou 2, dans laquelle la composition a :
une résistance au choc sur barreau entaillé d'après Izod supérieure à 750 Joules par mètre, de préférence supérieure à 800 Joules par mètre, lorsqu'elle est mesurée sur une barre d'échantillon moulée à partir de la composition et ayant une épaisseur de 3,2 millimètres, conformément à l'ASTM D256,
un module d'élasticité en traction supérieur à 2 000 mégapascals, de préférence supérieur à 2 100 mégapascals, lorsqu'il est mesuré conformément à l'ASTM D638,
une contrainte de traction à la limite d'élasticité supérieure à 50 mégapascals, de préférence supérieure à 55 mégapascals, lorsqu'elle est mesurée conformément à l'ASTM D638,
un allongement à la traction à la rupture supérieur à 80 %, de préférence supérieur à 90 %, lorsqu'il est mesuré conformément à l'ASTM D638, et
une température de déformation à chaud supérieure ou égale à 108 °C, lorsqu'elle est mesurée sur une barre d'échantillon moulée à partir de la composition et ayant une épaisseur de 3,2 millimètres conformément à l'ASTM D648.

4. La composition selon une ou plusieurs quelconques des revendications 1 à 3, dans laquelle
les motifs ester aliphatique dans le premier et le second poly(ester-carbonate aliphatique) sont chacun dérivés de l'acide sébacique, et sont présents dans chaque poly(ester-carbonate aliphatique) en une quantité de 5 à 10 pour cent en moles, de préférence de 6 à 9 pour cent en moles, sur la base de 100 pour cent en moles de chaque poly(ester-carbonate aliphatique), et
les motifs carbonate sont dérivés de bisphénol A.

5. La composition selon une ou plusieurs quelconques des revendications 1 à 4, dans laquelle l'agent de démoulage est du monostéarate de glycérol, du tétrastéarate de pentaérythritol, ou une combinaison comprenant au moins l'un des susmentionnés, ou dans laquelle l'agent de démoulage est du monostéarate de glycérol.

6. La composition selon une ou plusieurs quelconques des revendications 1 à 5, comprenant en outre :
5 à 30 pour cent en poids, de préférence 10 à 30 pour cent en poids d'un homopolycarbonate ramifié ; ou
10 à 30 pour cent en poids, de préférence 5 à 25 pour cent en poids d'un copolymère de polycarbonate-polysiloxane.

7. La composition selon une ou plusieurs quelconques des revendications 1 à 5, comprenant
15 à 80 pour cent en poids, de préférence 20 à 60 pour cent en poids du premier poly(ester-carbonate aliphatique) ;
10 à 80 pour cent en poids, de préférence 20 à 60 pour cent en poids du second poly(ester-carbonate aliphatique) ;
0 à 50 pour cent en poids, de préférence 10 à 50 pour cent en poids d'un homopolycarbonate ramifié de bisphénol A ;
0,01 à 0,5 pour cent en poids de l'agent de démoulage, de préférence du monostéarate de glycérol ;
0,01 à 0,5 pour cent en poids du stabilisant thermique ;
0,01 à 0,5 pour cent en poids de l'allongeur de chaîne ; et
0,01 à 8 pour cent en poids d'un photostabilisant,
dans laquelle la composition a un débit volumique moyen à l'état fondu inférieur à 15 centimètres cubes par 10 minutes lorsqu'il est mesuré à 300 °C à une charge de cisaillement de 1,2 kg, temps de séjour 300 secondes, conformément à l'ASTM 1238.

8. La composition selon une ou plusieurs quelconques des revendications 1 à 5, comprenant
15 à 35 pour cent en poids de préférence ou 20 à 30 pour cent en poids du premier poly(ester-carbonate aliphatique) ;
40 à 75 pour cent en poids, de préférence 45 à 70 pour cent en poids du second poly(ester-carbonate aliphatique) ;
10 à 30 pour cent en poids, de préférence 15 à 25 pour cent en poids d'un homopolycarbonate ramifié de bisphénol A ;
0,01 à 0,5 pour cent en poids de l'agent de démoulage, de préférence du monostéarate de glycérol ;
0,01 à 0,5 pour cent en poids du stabilisant thermique ;
0,01 à 0,5 pour cent en poids de l'allongeur de chaîne ; et
0,01 à 8 pour cent en poids d'un photostabilisant,
dans laquelle la composition a un débit volumique moyen à l'état fondu inférieur à 15 centimètres cubes par 10 minutes lorsqu'il est mesuré à 300 °C à une charge de cisaillement de 1,2 kg, temps de séjour 300 secondes, conformément à l'ASTM 1238.

9. La composition selon une ou plusieurs quelconques des revendications 1 à 5, comprenant
60 à 90 pour cent en poids, de préférence 65 à 85 pour cent en poids du premier poly(ester-carbonate aliphatique) ;
10 à 40 pour cent en poids, de préférence 15 à 35 pour cent en poids du second poly(ester-carbonate aliphatique) ;
0,01 à 0,5 pour cent en poids de l'agent de démoulage, de préférence du monostéarate de glycérol ;
0,01 à 0,5 pour cent en poids du stabilisant thermique ;
0,01 à 0,5 pour cent en poids de l'allongeur de chaîne ; et
0,01 à 8 pour cent en poids d'un photostabilisant,
dans laquelle la composition a un débit volumique moyen à l'état fondu inférieur à 10 centimètres cubes par 10 minutes lorsqu'il est mesuré à 300 °C à une charge de cisaillement de 1,2 kg, 360 secondes, conformément à l'ASTM 1238.

10. Un procédé de fabrication de la composition selon une ou plusieurs quelconques des revendications 1 à 9, le procédé comprenant :
le mélange à l'état fondu du premier poly(ester-carbonate aliphatique), du second poly(ester-carbonate aliphatique), de l'agent de démoulage, du stabilisant thermique, et de l'allongeur de chaîne.

11. Un procédé de fabrication d'une couche, le procédé comprenant l'extrusion de la composition selon une ou plusieurs quelconques des revendications 1 à 9 pour former la couche.

12. Le procédé selon la revendication 11, dans lequel la couche a une épaisseur de 2 à 5 000 micromètres, de préférence de 5 à 1 000 micromètres.

13. Un procédé de fabrication d'une couche gaufrée, le procédé comprenant le gaufrage thermique de la couche selon la revendication 11 ou 12 à une vitesse de ligne de 0,45 mètre par minute, de préférence de 0,5 mètre par minute, à 235 à 255 °C.

14. Un article comprenant la composition selon une ou plusieurs quelconques des revendications 1 à 9, la composition préparée par le procédé selon la revendication 11, ou la couche fabriquée par le procédé selon une ou plusieurs quelconques des revendications 11 à 13.

15. L'article selon la revendication 14, dans lequel l'article est une couche, ou une couche gaufrée, ou une couche rétroréfléchissante gaufrée.
